# EUROPEAN PATENT SPECIFICATION

(11) **EP 4 690 586 B1**
(45) Date of publication and mention of the grant of the patent: **26.08.2026**
(21) Application number: 24705106.3
(22) Date of filing: 12.02.2024
(51) Int. Cl.: H04L 1/1829

(54) **METHOD, APPARATUS AND COMPUTER PROGRAM**
VERFAHREN, VORRICHTUNG UND COMPUTERPROGRAMM
PROCÉDÉ, APPAREIL ET PROGRAMME INFORMATIQUE

(30) Priority: 04.04.2023 GB 202305004
(43) Date of publication of application: 11.02.2026
(73) Proprietor: Nokia Technologies Oy, 02610 Espoo (FI)
(72) Inventor: DEGHEL, Matha, 92120 Montrouge (FR); HUGL, Klaus, 1070 Vienna (AT)
(74) Representative: Samson & Partner Patentanwälte mbB
(86) International application number: PCT/EP2024/053479
(87) International publication number: WO 2024/208474

(56) References cited:
- JUNGHOON LEE ET AL: "Enhancements on cell DTX/DRX mechanism", vol. 3GPP RAN 1, no. Athens, GR; 20230227 - 20230303, 17 February 2023 (2023-02-17), XP052248191, Retrieved from the Internet <URL:https://www.3gpp.org/ftp/TSG_RAN/WG1_RL1/TSGR1_112/Docs/R1-2301048.zip R1-2301048 Enhancements on cell DTX DRX mechanism - final.docx> [retrieved on 20230217]
- XUELONG WANG ET AL: "Cell DTX and DRX support", vol. 3GPP RAN 2, no. Athens, GR; 20230227 - 20230303, 16 February 2023 (2023-02-16), XP052244897, Retrieved from the Internet <URL:https://www.3gpp.org/ftp/TSG_RAN/WG2_RL2/TSGR2_121/Docs/R2-2300247.zip R2-2300247 Cell DTX and DRX support.docx> [retrieved on 20230216]

## Description

### FIELD

The present application relates to an apparatus, method and computer program. In particular, but not exclusively, the present application relates to a hybrid automatic repeat request acknowledgement feedback regarding discontinuous transmission and reception.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

JUNGHOON LEE ET AL: "Enhancements on cell DTX/DRX mechanism", 3GPP DRAFT; R1-2301048 (2023-02-17) discloses DTX/DRX and HARQ-ACK codebook mechanisms. XUELONG WANG ET AL: "Cell DTX and DRX support", 3GPP DRAFT; R2-2300247 (2023-02-16) discloses general DTX and DRX features.

### SUMMARY

The invention is defined by the appended claims.

### DETAILED DESCRIPTION

The present disclosure relates to cell discontinuous transmission (cell DTX) or reception (cell DRX). Collectively, DTX and/or DRX can be referred to a discontinuous mode or a discontinuous state of a cell.

Network energy saving is of importance for environmental sustainability, for example to reduce environmental impact (greenhouse gas emissions), and for operational cost savings. As 5G is becoming pervasive across industries and geographical areas, handling more advanced services and applications requiring high data rates such as extended reality (XR), networks are becoming denser, use more antennas, and may require larger bandwidths and more frequency bands. The environmental impact of 5G needs to stay under control, and novel solutions to improve network energy savings need to be developed.

Energy saving is a part of operators' expenditure (OPEX.). Typically, most of the energy consumption comes from the radio access network, and in particular from the Active Antenna Unit (AAU), with data centres and fibre transport accounting for a smaller share. The power consumption of radio access can be split into two parts: the dynamic part which is only consumed when data transmission/reception is ongoing, and the static part which is consumed all the time to maintain the necessary operation of the radio access devices, even when data transmission/reception is not on-going.

Hybrid Automatic Repeat Request (HARQ) is a combination of high-rate forward error correction and automatic repeat request error-control. A UE may transmit a positive acknowledgement (ACK) as HARQ-ACK feedback to indicate successful reception of one or more transport blocks or code-blocks on Physical Downlink Shared Channel (PDSCH) . Likewise, a UE may transmit a negative acknowledgment (NACK) NACK as HARQ-ACK feedback to indicate unsuccessful or no reception of one or more PDSCHs (or, transport blocks or code-blocks).

In NR Rel15, two HARQ-ACK codebooks (CBs) were specified:
Type 1 HARQ-ACK codebook, also denoted as semi-static HARQ-ACK codebook, is determined based on radio resource control (RRC) configured parameters, such as a set of slot timing values K1, PDSCH time domain allocation list, semi-static UL/DL configuration. As a result, the Type 1 codebook (CB size and A/N ordering within the Type 1 CB) are determined reliably. However, as the CB does not depend on the actual PDSCH scheduling, the CB size is typically larger than needed, and in some cases can be excessive. In Release 16, Type-3 HARQ-ACK codebook was introduced to provide a one-shot HARQ-ACK feedback of all DL HARQ processes of all configured DL serving cells.
Type 2 HARQ-ACK codebook is determined based on the scheduled DL assignments. The CB size is dimensioned efficiently but there is a possibility of codebook determination error due to UE missing a DL assignment. To mitigate the error, counter Downlink Assignment Index (DAI) and, possibly, total DAI is included in a DL assignment. DAI is a 2-bit counter of PDSCHs scheduled to the UE with HARQ-ACK to be reported in the same codebook, up to the symbol on which the DL assignment with the DAI is transmitted. Nevertheless, codebook determination errors occur when for case 1 the UE misses the last DL assignment associated to the codebook or when for case 2 UE misses four consecutive DL assignments. From these reasons for errors, the case 1 of the UE missing the last DL assignment is the dominant one (compared to error case 2). In RAN1 discussions, DL assignment detection failure probability of 1% is frequently used for normal, low-priority traffic.

In Rel-16 NR, enhanced ultra-reliable low latency communication (eURLLC), downlink (DL) semi-persistent scheduling (SPS) was enhanced to support URLLC and time sensitive communications (TSC). Some of the enhancements for DL SPS for industrial internet of things (IIOT) are:
(i) the UE could have up to eight simultaneous active DL SPS configurations (in a bandwidth part (BWP)), which are separately configured and activated, where the periodicity of an SPS configuration is at least one slot.
(ii) the activation of an SPS configuration is done via PDCCH, and the UE is required to attempt PDSCH detection in each SPS PDSCH occasion and provide a corresponding HARQ-ACK feedback. Note that this is regardless of whether there is an actual PDSCH transmission or not, as the UE typically does not know if there will be a transmission or not in this case.
(iii) for the reception of a PDSCH and its corresponding HARQ-ACK feedback, the UE follows the configuration parameters provided via the activating PDCCH and via RRC.

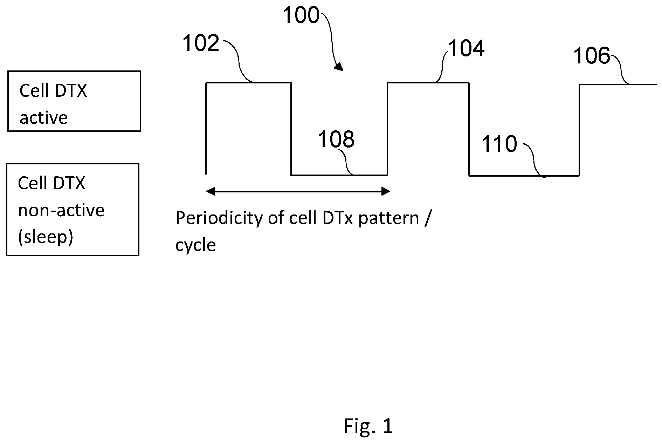

An example of cell DTX operation is shown in Figure 1. Peaks 102, 104 and 106 of the example pattern 100 show periods where the cell (e.g. gNB) is active, and the troughs 108 and 110 of the pattern 100 show periods where the cell (e.g. gNB) is inactive.

The present disclosure considers the effect of cell DTX non-active periods on HARQ-ACK feedback. More specifically, the present disclosure considers how HARQ-ACK feedback content and reporting can be defined. The present disclosure also considers impact on Type 1 HARQ-ACK codebook as well as on SPS HARQ-ACK feedback in general.

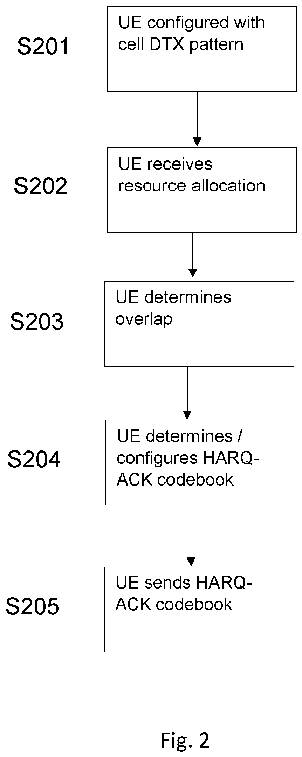

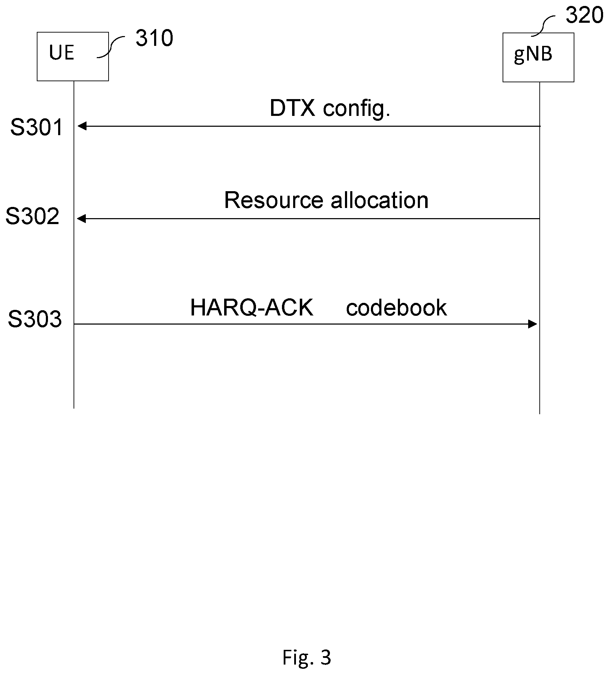

Some examples will now be described with respect to the flow chart of Figure 2 and the signalling diagram of Figure 3. The UE is schematically shown at 310, and a base station (gNB) of a DTX cell is schematically shown at 320.

According to some examples, the UE 310 is in a cell configured with a cell DTX (discontinuous transmission) pattern (or cycle configuration), which consists of cell DTX non-active periods and cell DTX active periods. This is shown at S201 in Figure 2. In examples, the DTX configuration comprises information of cell DTX non-active periods and cell DTX active periods. In some examples, the cell DTX configuration (e.g., cell-DTX-configuration) is received from gNB 320 of the cell that is in DTX. This is schematically shown at S301 in Figure 3. In some examples the UE 310 at least partially determines the non-active periods of the cell. This determination may be based on one or more of: the cell DTX pattern(s)/cycle(s): one or more configured timers: and/or indication of activation/deactivation of the cell DTX pattern/cycle. Therefore, it may be considered that the UE 310 obtains information of non-active periods of the cell.

The UE 310 also receives at least one resource allocation, as shown at S202 in Figure 2 and S302 in Figure 3. The at least one resource allocation comprises a physical downlink shared channel (PDSCH) resource allocation. For example, the at least one resource allocation may indicate one or more DL slots or symbols that are allocated to the UE 310 for PDSCH reception. In some examples, the resource allocation is received from gNB 320.

In some examples, the physical downlink shared channel resource allocation comprises a semi-static physical downlink shared channel resource allocation. The semi-static physical downlink shared channel resource allocation may comprise one or more of: a physical downlink shared channel time domain resource allocation; a semi-persistent scheduling resource allocation; or a semi-persistent scheduling group resource allocation. In some examples, an indication received at the UE of shared channel time domain resource allocation; the semi-persistent scheduling resource allocation; or the semi-persistent scheduling group resource allocation can be configured jointly or separately.

The UE 310 then determines one or more resources (e.g. slots and/or symbols) of the PDSCH resource allocation that overlap with one or more non-active periods of the cell. This is schematically shown at S203 in Figure 2. In some examples, the overlap could be a full overlap or a partial overlap.

Based on the determined overlap, the UE 310 then determines a HARQ-ACK codebook, as shown at S204. The configured HARQ-ACK codebook may later be transmitted by the UE. This is shown at S205 in Figure 2. In some examples, the UE may omit or remove any time domain resource allocation (TDRA) entry or row (e.g. pointing to a candidate or actual PDSCH time domain resource allocation) and/or any HARQ-ACK bits corresponding to a PDSCH that would overlap, partially or fully, with DTX non-active periods of the cell in the HARQ-ACK codebook construction. Therefore, the UE may not generate HARQ-ACK bit(s) corresponding to such PDSCH allocation.

In some examples, for Type 1 HARQ-ACK codebook, i.e. semi-static HARQ-ACK codebook, the UE may omit or remove any candidate PDSCH resource allocations that would overlap (in time) with a cell DTX non-active period in the Type 1 HARQ-ACK codebook construction. In such a case, the omitting operation for Type 1 HARQ-ACK codebook takes into account the cell DTX non-active periods. In other words, for candidate (potential) PDSCH resource allocations for the Type 1 HARQ-ACK codebook omitting, the UE may remove the rows of any TDRA entry which may or may not actually be scheduled (e.g. where there is no resource allocation present for the UE based on SPS or dynamic scheduling).

In some examples, for Type 1 HARQ-ACK codebook as well as Type 2 HARQ-ACK codebook, the UE may omit or not include (actual) PDSCH time domain resource allocations or one or more HARQ-ACK bits of (actual) PDSCH time domain resource allocations that would overlap (in time) with a cell DTX non-active period in the HARQ-ACK codebook. In such a case, the omitting operation for Type 1 HARQ-ACK codebook takes into account the cell DTX non-active periods.

In some examples, for SPS HARQ-ACK, the UE may omit or not include one or more HARQ-ACK resource allocations corresponding to an SPS PDSCH that would overlap (in time) with a cell DTX non-active period in the HARQ-ACK codebook.

The UE 310 may then transmit HARQ-ACK codebook as feedback to the gNB 320 according to the determined structure. This is schematically shown at S205 in Figure 2, and S303 in Figure 3.

It is possible in some examples that, based on step 204, the UE determines that the HARQ-ACK codebook or HARQ-ACK content in a PUCCH is empty (i.e. size zero). For example, this may occur if the cell is inactive in all available DL slots where the PDSCH HARQ-ACK could map to a specific PUCCH slot. If this PUCCH does not include any other UCI (uplink control information content), the UE may refrain from transmitting this PUCCH.

In some examples, the way in which the UE 310 structures the HARQ-ACK codebook (e.g. omitting symbols, slots or bits) is based on a configuration or indication sent from the network e.g. from gNB 320. For example, the configuration or indication may be sent by radio resource control (RRC) message, media access control control element (MAC CE), or by downlink control information (DCI).

In some examples, the UE 310 may be configured per SPS (PDSCH) configuration or group of SPS configurations, e.g., via RRC, whether or not to include HARQ-ACK bit(s) in the HARQ-ACK codebook corresponding to an SPS PDSCH that would overlap, partially or fully, with DTX non-active period(s).

In some examples, if the UE is indicated (e.g., via MAC CE or DCI), or higher-layer configured (e.g., configured by activity timers or any other timers) to shorten or extend one or more cell DTX non-active periods by at least one time offset (e.g., depending on the transmission or reception of certain DL/UL channels/signals such as PDCCH), then the UE 310 may be configured to not follow the above described operations (e.g. omitting symbols, slots or bits from the HARQ-ACK) during the at least one time offset.

It is also to be noted that, in some examples, if the UE 310 is configured/specified to generate HARQ-ACK feedback/bits for a PDSCH that would overlap, partially or fully, with DTX non-active periods, then the UE may generate an NACK (i.e., negative acknowledgement) for such a PDSCH.

In some examples it may be considered that in the Type 1 HARQ-ACK codebook construction based on the candidate PDSCH time domain resource allocations:
if the UE is provided *cell-DTX-Configuration,* for each slot from slot ${n}_{0 , k} + {n}_{D} - {N}_{PDSCH}^{repeat , max} + 1$ to slot *n*_{0*,k*} + *n_{D},* at least one symbol of the PDSCH time resource derived by row *r* overlaps with a non-active period(s) indicated by *cell-DTX-Configuration* where *K*_{1*,k*} is the *k*-th slot timing value in set *K*₁, where *n*_{0*,k*} is a DL slot with a smallest index among DL slots overlapping with UL slot *n_{U} - K*₁*_{,k},* or *subslotLengthForPUCCH* is provided for the HARQ-ACK codebook and the end of the PDSCH time resource for row *r* is not within any UL slot *n_{U} - K*_{1,}*ₗ,* 0 ≤ *l* < C(*K*₁), or if *pdsch-TimeDomainAllocationListForMultiPDSCH* is provided and HARQ-ACK information for PDSCH time resource derived by row *r* in slot *n*_{0*,k*} + *n_{D}* cannot be provided in slot *n_{U},* $R = R \ r ;$ Where:
- R = set of row indexes of a table that is associated with the active DL BWP and defining respective sets of slot offsets *K*₀, start and length indicators *SLIV,* and PDSCH mapping types for PDSCH reception,
- r = index of a row in the set R, and to be more specific to one candidate PDSCH resource allocation,
- C(*K*₁) is the cardinality of the set of slot timing values *K*₁,
- *n_{U}* is the slot for PUCCH transmission of the Type 1 HARQ-ACK codebook,
- *n_{D}* is a downlink slot,
- *n*_{0*,k*} is a DL slot with a smallest index among DL slots overlapping with UL slot *n_{U} - K*₁*_{,k},* and
- ${N}_{PDSCH}^{repeat , max}$ is a maximum value of a PDSCH repetition / aggregation factor.

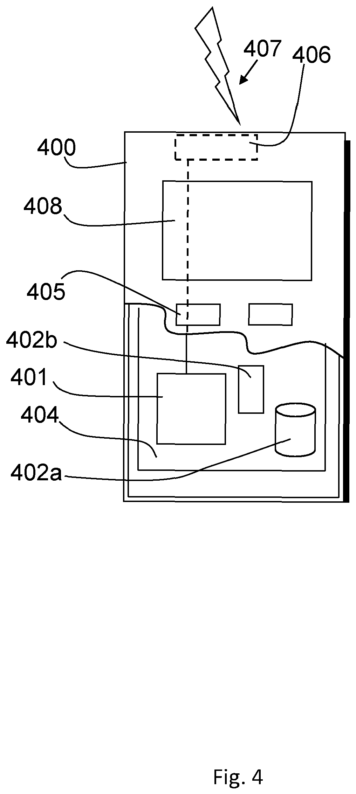

Figure 4 illustrates an example of a terminal device 400. The terminal device 400 may be provided by any device capable of sending and receiving radio signals. Non-limiting examples comprise a user device, user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal device 400 may provide, for example, communication of data for carrying communications. The communications may be one or more of voice, electronic mail (email), text message, multimedia, data, machine data and so on.

The terminal device 400 may receive signals over an air or radio interface 407 via appropriate apparatus for receiving and may transmit signals via appropriate apparatus for transmitting radio signals. In Figure 4, transceiver apparatus is designated schematically by block 406. The transceiver apparatus 406 may be provided for example by means of a radio part and associated antenna arrangement. The antenna arrangement may be arranged internally or externally to the mobile device.

The terminal device 400 may be provided with at least one processor 401, at least one ROM 402a, at least one RAM 402b and other possible components for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 404.

The device may optionally have a user interface such as keypad 405, touch sensitive screen or pad, combinations thereof or the like. Optionally one or more of a display 408, a speaker and a microphone may be provided depending on the type of the device.

UEs, such as UE in Figure 2 or UE 310 in Figure 3 may take the form of a terminal device 400 as schematically shown in Figure 4.

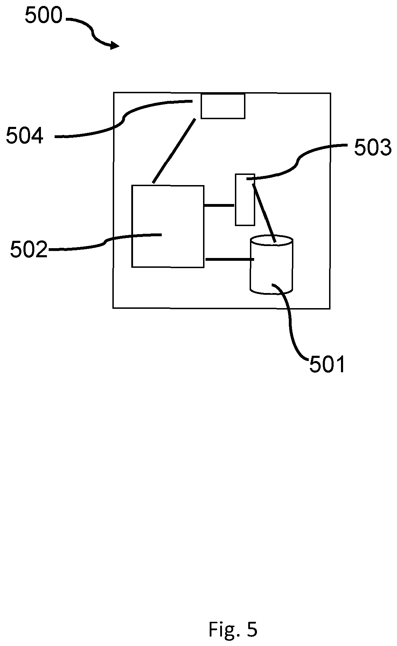

Figure 5 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, a server or host. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 500 can be arranged to provide control on communications in the service area of the system. The control apparatus 500 comprises at least one memory 501, at least one data processing unit 502, 503 and an input/output interface 504. Via the interface the control apparatus can be coupled to a receiver and a transmitter of the base station. The receiver and/or the transmitter may be implemented as a radio front end or a remote radio head. For example, the control apparatus 500 or processor 501 can be configured to execute an appropriate software code to provide the control functions. A network entity, such as gNB 320, discussed with respect to Figure 3 may take the form of a control apparatus as shown in Figure 3.

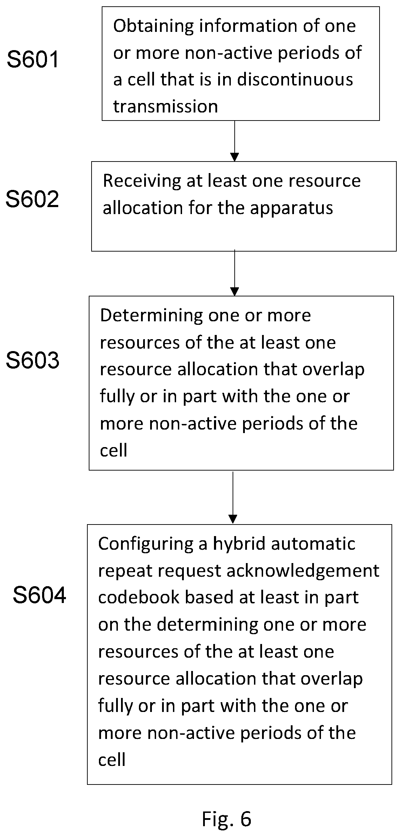

Figure 6 is a flow chart of a method according to an example. The flow chart of Figure 6 may be viewed from the perspective of an apparatus. For example, the apparatus may be a UE.

As shown at S601, the method comprises obtaining information of one or more non-active periods of a cell that is in discontinuous transmission.

At S602, the method comprises receiving at least one resource allocation for the apparatus.

At S603, the method comprises determining one or more resources of the at least one resource allocation that overlap with the one or more non-active periods of the cell.

At S604, the method comprises configuring a hybrid automatic repeat request acknowledgement codebook based at least in part on the determining one or more resources of the resource allocation that overlap with the one or more non-active periods of the cell.

The hybrid automatic repeat request acknowledgement codebook is configured by omitting resource allocation from the hybrid automatic repeat request acknowledgement codebook, and the omitted resource allocation corresponds to the one or more resources that overlap fully or in part with the one or more non-active periods of the cell.

According to some examples, the omitting resource allocation comprises omitting one or more bits from the hybrid automatic repeat request acknowledgement codebook.

According to some examples, the one or more resources comprises one or more slots or symbols.

The at least one resource allocation comprises at least one physical downlink shared channel resource allocation.

According to some examples, the physical downlink shared channel resource allocation comprises a semi-static physical downlink shared channel resource allocation which comprises one or more of: a physical downlink shared channel time domain resource allocation; a semi-persistent scheduling resource allocation; or a semi-persistent scheduling group resource allocation.

According to some examples, the method comprises jointly or separately configuring the physical downlink shared channel time domain resource allocation; the semi-persistent scheduling resource allocation; or the semi-persistent scheduling group resource allocation.

According to some examples, the obtaining information of one or more non-active periods of a cell comprises receiving information of one or more non-active periods of a cell.

According to some examples, the method comprises receiving information via one or more of: radio resource control message; media access control control element; downlink control information, including information of one or more of: (i) an indication to enable the apparatus to omit resource allocation which overlaps fully or in part with the one or more non-active periods of the cell from hybrid automatic repeat request feedback; and (ii) an indication of whether the apparatus should support (i) during a reduced or extended one or more non-active periods of the cell; (iii) an indication of whether the apparatus should support (i) during a validity period or an expiry time.

According to some examples the method comprises transmitting hybrid automatic repeat request acknowledgement feedback using the configured hybrid automatic repeat request acknowledgement codebook.

According to some examples the method comprises refraining from transmitting the hybrid automatic repeat request acknowledgement feedback on a physical uplink control channel, when the configured hybrid automatic repeat request acknowledgement codebook is empty.

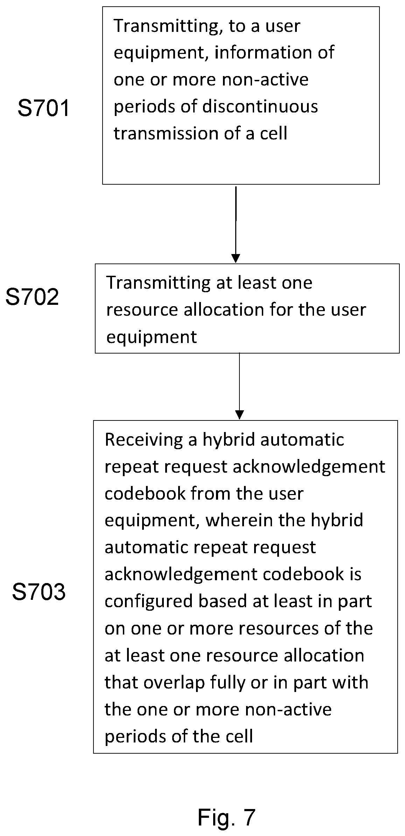

Figure 7 is a flow chart of a method according to an example. The flow chart of Figure 7 may be viewed from the perspective of an apparatus. For example, the apparatus may be a base station.

As shown at S701, the method comprises transmitting, to a user equipment, information of one or more non-active periods of discontinuous transmission of a cell.

At S702, the method comprises transmitting at least one resource allocation for the user equipment.

At S703, the method comprises receiving a hybrid automatic repeat request acknowledgement codebook from the user equipment, wherein the hybrid automatic repeat request acknowledgement codebook is configured based at least in part on one or more resources of the at least one resource allocation that overlap fully or in part with the one or more non-active periods of the cell.

The received hybrid automatic repeat request acknowledgement codebook omits resource allocation from the hybrid automatic repeat request acknowledgement codebook, and the omitted resource allocation corresponds to the one or more resources that overlap fully or in part with the one or more non-active periods of the cell.

According to some examples, the omitted resource allocation comprises one or more omitted bits from the hybrid automatic repeat request acknowledgement codebook.

According to some examples, the method comprises sending information to the user equipment by one or more of: radio resource control message; media access control control element; downlink control information, including information of one or more of: (i) an indication to enable the user equipment to omit resource allocation which overlaps fully or in part with the one or more non-active periods of the cell from hybrid automatic repeat request feedback; (ii) an indication of whether the user equipment should support (i) during a reduced or extended one or more non-active periods of the cell; and (iii) an indication of whether the user equipment should support (i) during a validity period or an expiry time.

According to some examples, the one or more resources comprises one or more slots or symbols.

The at least one resource allocation comprises at least one physical downlink shared channel resource allocation.

According to some examples, the physical downlink shared channel resource allocation comprises a semi-static physical downlink shared channel resource allocation which comprises one or more of: a physical downlink shared channel time domain resource allocation; a semi-persistent scheduling resource allocation; or a semi-persistent scheduling group resource allocation.

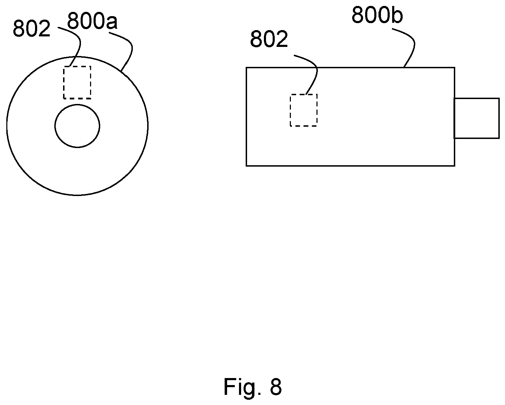

Figure 8 shows a schematic representation of non-volatile memory media 800a (e.g. computer disc (CD) or digital versatile disc (DVD)) and 800b (e.g. universal serial bus (USB) memory stick) storing instructions and/or parameters 802 which when executed by a processor allow the processor to perform one or more of the steps of the method of Figure 6 or Figure 7.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Likewise, phrases such as "X and/or Y" or "X/Y" can be considered to cover either X or Y alone, or X and Y together.

Where it is said that a node or element (e.g. UE or gNB) "determines" information or the like, this may be considered to cover various ways in which that node becomes aware of or obtains that information. For example, determining may include performing one or more processing steps. Determining may also cover receiving the information, for example from another entity.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM). The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples. Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. The scope of the invention is defined by the appended claims.

## Claims

1. An apparatus (310, 400) comprising:
means for obtaining information (S201, S301, S601) of one or more non-active periods of a cell, wherein the information of the one or more non-active periods of the cell is obtained based on a cell discontinuous transmission pattern configured for the cell and an indication of activation or deactivation of the cell discontinuous transmission pattern;
means for receiving (S202, S302, S602) at least one physical downlink shared channel resource allocation for the apparatus;
means for determining (S203, S603) one or more resources of the at least one physical downlink shared channel resource allocation that overlap fully or in part with the one or more non-active periods of the cell; and
means for determining (S204, S604) a hybrid automatic repeat request acknowledgement codebook based at least in part on the determining one or more resources of the at least one physical downlink shared channel resource allocation that overlap fully or in part with the one or more non-active periods of the cell, wherein the hybrid automatic repeat request acknowledgement codebook is determined by omitting the one or more resources that overlap fully or in part with the one or more non-active periods of the cell.

2. An apparatus (320) comprising:
means for transmitting (S301, S701), to a user equipment, information of one or more non-active periods of a cell, wherein the information of the one or more non-active periods of the cell is transmitted based on a cell discontinuous transmission pattern configured for the cell and an indication of activation or deactivation of the cell discontinuous transmission pattern;
means for transmitting (S302, S702) at least one physical downlink shared channel resource allocation for the user equipment; and
means for receiving (S303, S703) a hybrid automatic repeat request acknowledgement codebook from the user equipment, wherein the hybrid automatic repeat request acknowledgement codebook is determined based at least in part on one or more resources of the at least one physical downlink shared channel resource allocation that overlap fully or in part with the one or more non-active periods of the cell, wherein the hybrid automatic repeat request acknowledgement codebook is determined by omitting the one or more resources that overlap fully or in part with the one or more non-active periods of the cell.

3. The apparatus (310, 320, 400) according to any of claims 1 to 2, wherein the one or more resources comprises one or more slots or symbols.

4. The apparatus (310, 320, 400) according to any of claims 1 to 3, wherein the at least one physical downlink shared channel resource allocation comprises a semi-static physical downlink shared channel resource allocation which comprises one or more of: a physical downlink shared channel time domain resource allocation; a semi-persistent scheduling resource allocation; or a semi-persistent scheduling group resource allocation.

5. The apparatus (310, 320, 400) according to any of claims 1 to 4, wherein the one or more resources of the at least one physical downlink shared channel resource allocation overlap, in time, fully or in part with the one or more non-active periods of the cell.

6. The apparatus (310, 320, 400) according to any of claims 1 to 5, wherein the cell discontinuous transmission pattern is indicative of a cell discontinuous transmission cycle.

7. A method performed by an apparatus, comprising:
obtaining information (S201, S301, S601) of one or more non-active periods of a cell, wherein the information of the one or more non-active periods of the cell is obtained based on a cell discontinuous transmission pattern configured for the cell and an indication of activation or deactivation of the cell discontinuous transmission pattern;
receiving (S202, S302, S602) at least one physical downlink shared channel resource allocation for the apparatus;
determining (S203, S603) one or more resources of the at least one physical downlink shared channel resource allocation that overlap fully or in part with the one or more non-active periods of the cell; and
determining (S204, S604) a hybrid automatic repeat request acknowledgement codebook based at least in part on the determining one or more resources of the at least one physical downlink shared channel resource allocation that overlap fully or in part with the one or more non-active periods of the cell, wherein the hybrid automatic repeat request acknowledgement codebook is determined by omitting the one or more resources that overlap fully or in part with the one or more non-active periods of the cell.

8. A method performed by an apparatus, comprising:
transmitting (S301, S701), to a user equipment, information of one or more non-active periods of a cell, wherein the information of the one or more non-active periods of the cell is transmitted based on a cell discontinuous transmission pattern configured for the cell and an indication of activation or deactivation of the cell discontinuous transmission pattern;;
transmitting (S302, S702) at least one physical downlink shared channel resource allocation for the user equipment; and
receiving (S303, S703) a hybrid automatic repeat request acknowledgement codebook from the user equipment, wherein the hybrid automatic repeat request acknowledgement codebook is determined based at least in part on one or more resources of the at least one physical downlink shared channel resource allocation that overlap fully or in part with the one or more non-active periods of the cell, wherein the hybrid automatic repeat request acknowledgement codebook is determined by omitting the one or more resources that overlap fully or in part with the one or more non-active periods of the cell.

9. The method according to any of claims 7 to 8, wherein the one or more resources comprises one or more slots or symbols.

10. The method according to any of claims 7 to 9, wherein the one or more resources of the at least one physical downlink shared channel resource allocation overlap, in time, fully or in part with the one or more non-active periods of the cell.

11. The method according to any of claims 7 to 10, wherein the cell discontinuous transmission pattern is indicative of a cell discontinuous transmission cycle.

12. A computer readable medium comprising instructions which, when executed by an apparatus, cause the apparatus to perform at least the following:
obtaining information (S201, S301, S601) of one or more non-active periods of a cell, wherein the information of the one or more non-active periods of the cell is obtained based on a cell discontinuous transmission pattern configured for the cell and an indication of activation or deactivation of the cell discontinuous transmission pattern;
receiving (S202, S302, S602) at least one physical downlink shared channel resource allocation for the apparatus;
determining (S203, S603) one or more resources of the at least one physical downlink shared channel resource allocation that overlap fully or in part with the one or more non-active periods of the cell; and
determining (S204, S604)a hybrid automatic repeat request acknowledgement codebook based at least in part on the determining one or more resources of the at least one physical downlink shared channel resource allocation that overlap fully or in part with the one or more non-active periods of the cell, wherein the hybrid automatic repeat request acknowledgement codebook is determined by omitting the one or more resources that overlap fully or in part with the one or more non-active periods of the cell.

13. A computer readable medium comprising instructions which, when executed by an apparatus, cause the apparatus to perform at least the following:
transmitting (S301, S701), to a user equipment, information of one or more non-active periods of a cell wherein the information of the one or more non-active periods of the cell is transmitted based on a cell discontinuous transmission pattern configured for the cell and an indication of activation or deactivation of the cell discontinuous transmission pattern;
transmitting (S302, S702) at least one physical downlink shared channel resource allocation for the user equipment; and
receiving (S303, S703) a hybrid automatic repeat request acknowledgement codebook from the user equipment, wherein the hybrid automatic repeat request acknowledgement codebook is determined based at least in part on one or more resources of the at least one physical downlink shared channel resource allocation that overlap fully or in part with the one or more non-active periods of the cell, wherein the hybrid automatic repeat request acknowledgement codebook is determined by omitting the one or more resources that overlap fully or in part with the one or more non-active periods of the cell.

14. The computer readable medium according to any of claims 12 to 13, wherein the at least one physical downlink shared channel resource allocation comprises a semi-static physical downlink shared channel resource allocation which comprises one or more of: a physical downlink shared channel time domain resource allocation; a semi-persistent scheduling resource allocation; or a semi-persistent scheduling group resource allocation.

15. The computer readable medium according to any of claims 12 to 14, wherein the cell discontinuous transmission pattern is indicative of a cell discontinuous transmission cycle.

## Patentansprüche

1. Vorrichtung (310, 400), umfassend:
Mittel zum Erhalten von Informationen (S201, S301, S601) über einen oder mehrere inaktive Zeiträume einer Zelle, wobei die Information über den einen oder die mehreren inaktiven Zeiträume der Zelle basierend auf einem für die Zelle konfigurierten diskontinuierlichen Übertragungsmuster der Zelle und einer Angabe der Aktivierung oder Deaktivierung des diskontinuierlichen Übertragungsmusters der Zelle erhalten werden;
Mittel zum Empfangen (S202, S302, S602) mindestens einer Physical Downlink Shared Channel Resource Allocation für die Vorrichtung;
Mittel zum Bestimmen (S203, S603) einer oder mehrerer Ressourcen der mindestens einen Physical Downlink Shared Channel Resource Allocation, die sich vollständig oder teilweise mit dem einen oder den mehreren inaktiven Zeiträumen der Zelle überschneiden; und
Mittel zum Bestimmen (S204, S604) eines Hybrid Automatic Repeat Request Acknowledgement Codebook zumindest teilweise basierend auf dem Bestimmen einer oder mehrerer Ressourcen der mindestens einen Physical Downlink Shared Channel Resource Allocation, die sich vollständig oder teilweise mit dem einen oder den mehreren inaktiven Zeiträumen der Zelle überschneiden, wobei das Hybrid Automatic Repeat Request Acknowledgement Codebook durch Weglassen der einen oder der mehreren Ressourcen bestimmt wird, die sich vollständig oder teilweise mit dem einen oder den mehreren inaktiven Zeiträumen der Zelle überschneiden.

2. Vorrichtung (320), umfassend:
Mittel zum Senden (S301, S701) von Informationen über einen oder mehrere inaktive Zeiträume einer Zelle an eine Benutzereinrichtung, wobei die Informationen über den einen oder die mehreren inaktiven Zeiträume der Zelle basierend auf einem für die Zelle konfigurierten diskontinuierlichen Übertragungsmuster der Zelle und einer Angabe der Aktivierung oder Deaktivierung des diskontinuierlichen Übertragungsmusters der Zelle gesendet werden;
Mittel zum Senden (S302, S702) mindestens einer Physical Downlink Shared Channel Resource Allocation für die Benutzereinrichtung; und
Mittel zum Empfangen (S303, S703) eines Hybrid Automatic Repeat Request Acknowledgement Codebook von der Benutzereinrichtung, wobei das Hybrid Automatic Repeat Request Acknowledgement Codebook zumindest teilweise basierend auf einer oder mehreren Ressourcen der mindestens einen Physical Downlink Shared Channel Resource Allocation bestimmt wird, die sich vollständig oder teilweise mit dem einen oder den mehreren inaktiven Zeiträumen der Zelle überschneiden, wobei das Hybrid Automatic Repeat Request Acknowledgement Codebook durch Weglassen der einen oder der mehreren Ressourcen bestimmt wird, die sich vollständig oder teilweise mit dem einen oder den mehreren inaktiven Zeiträumen der Zelle überschneiden.

3. Vorrichtung (310, 320, 400) nach einem der Ansprüche 1 bis 2, wobei die eine oder die mehreren Ressourcen einen oder mehrere Slots oder ein oder mehrere Symbole umfassen.

4. Vorrichtung (310, 320, 400) nach einem der Ansprüche 1 bis 3, wobei die mindestens eine Physical Downlink Shared Channel Resource Allocation eine semistatische Physical Downlink Shared Channel Resource Allocation umfasst, die eine oder mehrere von folgenden umfasst: eine Physical Downlink Shared Channel Time Domain Resource Allocation; eine Semi-Persistent Scheduling Resource Allocation; oder eine Semi-Persistent Scheduling Group Resource Allocation.

5. Vorrichtung (310, 320, 400) nach einem der Ansprüche 1 bis 4, wobei sich die eine oder die mehreren Ressourcen der mindestens einen Physical Downlink Shared Channel Resource Allocation zeitlich vollständig oder teilweise mit dem einen oder den mehreren inaktiven Zeiträumen der Zelle überschneiden.

6. Vorrichtung (310, 320, 400) nach einem der Ansprüche 1 bis 5, wobei das diskontinuierliche Übertragungsmuster der Zelle einen diskontinuierlichen Übertragungszyklus der Zelle angibt.

7. Verfahren, das von einer Vorrichtung durchgeführt wird, umfassend:
Erhalten von Informationen (S201, S301, S601) über einen oder mehrere inaktive Zeiträume einer Zelle, wobei die Informationen über den einen oder die mehreren inaktiven Zeiträume der Zelle basierend auf einem für die Zelle konfigurierten diskontinuierlichen Übertragungsmuster der Zelle und einer Angabe der Aktivierung oder Deaktivierung des diskontinuierlichen Übertragungsmusters der Zelle erhalten werden;
Empfangen (S202, S302, S602) mindestens einer Physical Downlink Shared Channel Resource Allocation für die Vorrichtung;
Bestimmen (S203, S603) einer oder mehrerer Ressourcen der mindestens einen Physical Downlink Shared Channel Resource Allocation, die sich vollständig oder teilweise mit dem einen oder den mehreren inaktiven Zeiträumen der Zelle überschneiden; und
Bestimmen (S204, S604) eines Hybrid Automatic Repeat Request Acknowledgement Codebook zumindest teilweise basierend auf dem Bestimmen einer oder mehrerer Ressourcen der mindestens einen Physical Downlink Shared Channel Resource Allocation, die sich vollständig oder teilweise mit dem einen oder den mehreren inaktiven Zeiträumen der Zelle überschneiden, wobei das Hybrid Automatic Repeat Request Acknowledgement Codebook durch Weglassen der einen oder der mehreren Ressourcen bestimmt wird, die sich vollständig oder teilweise mit dem einen oder den mehreren inaktiven Zeiträumen der Zelle überschneiden.

8. Verfahren, das von einer Vorrichtung durchgeführt wird, umfassend:
Senden (S301, S701) von Informationen über einen oder mehrere inaktive Zeiträume einer Zelle an eine Benutzereinrichtung, wobei die Informationen über den einen oder die mehreren inaktiven Zeiträume der Zelle basierend auf einem für die Zelle konfigurierten diskontinuierlichen Übertragungsmuster der Zelle und einer Angabe der Aktivierung oder Deaktivierung des diskontinuierlichen Übertragungsmusters der Zelle gesendet werden;
Senden (S302, S702) mindestens einer Physical Downlink Shared Channel Resource Allocation für die Benutzereinrichtung; und
Empfangen (S303, S703) eines Hybrid Automatic Repeat Request Acknowledgement Codebook von der Benutzereinrichtung, wobei das Hybrid Automatic Repeat Request Acknowledgement Codebook zumindest teilweise basierend auf einer oder mehreren Ressourcen der mindestens einen Physical Downlink Shared Channel Resource Allocation bestimmt wird, die sich vollständig oder teilweise mit dem einen oder den mehreren inaktiven Zeiträumen der Zelle überschneiden, wobei das Hybrid Automatic Repeat Request Acknowledgement Codebook durch Weglassen der einen oder der mehreren Ressourcen bestimmt wird, die sich vollständig oder teilweise mit dem einen oder den mehreren inaktiven Zeiträumen der Zelle überschneiden.

9. Verfahren nach einem der Ansprüche 7 bis 8, wobei die eine oder die mehreren Ressourcen einen oder mehrere Slots oder ein oder mehrere Symbole umfassen.

10. Verfahren nach einem der Ansprüche 7 bis 9, wobei sich die eine oder die mehreren Ressourcen der mindestens einen Physical Downlink Shared Channel Resource Allocation zeitlich vollständig oder teilweise mit dem einen oder den mehreren inaktiven Zeiträumen der Zelle überschneiden.

11. Verfahren nach einem der Ansprüche 7 bis 10, wobei das diskontinuierliche Übertragungsmuster der Zelle einen diskontinuierlichen Übertragungszyklus der Zelle angibt.

12. Computerlesbares Medium, umfassend Anweisungen, die, wenn sie von einer Vorrichtung ausgeführt werden, die Vorrichtung veranlassen, mindestens Folgendes durchzuführen:
Erhalten von Informationen (S201, S301, S601) über einen oder mehrere inaktive Zeiträume einer Zelle, wobei die Information über den einen oder die mehreren inaktiven Zeiträume der Zelle basierend auf einem für die Zelle konfigurierten diskontinuierlichen Übertragungsmuster der Zelle und einer Angabe der Aktivierung oder Deaktivierung des diskontinuierlichen Übertragungsmusters der Zelle erhalten werden;
Empfangen (S202, S302, S602) mindestens einer Physical Downlink Shared Channel Resource Allocation für die Vorrichtung;
Bestimmen (S203, S603) einer oder mehrerer Ressourcen der mindestens einen Physical Downlink Shared Channel Resource Allocation, die sich vollständig oder teilweise mit dem einen oder den mehreren inaktiven Zeiträumen der Zelle überschneiden; und
Bestimmen (S204, S604) eines Hybrid Automatic Repeat Request Acknowledgement Codebook zumindest teilweise basierend auf dem Bestimmen einer oder mehrerer Ressourcen der mindestens einen Physical Downlink Shared Channel Resource Allocation, die sich vollständig oder teilweise mit dem einen oder den mehreren inaktiven Zeiträumen der Zelle überschneiden, wobei das Hybrid Automatic Repeat Request Acknowledgement Codebook durch Weglassen der einen oder der mehreren Ressourcen bestimmt wird, die sich vollständig oder teilweise mit dem einen oder den mehreren inaktiven Zeiträumen der Zelle überschneiden.

13. Computerlesbares Medium, umfassend Anweisungen, die, wenn sie von einer Vorrichtung ausgeführt werden, die Vorrichtung veranlassen, mindestens Folgendes durchzuführen:
Senden (S301, S701) von Informationen über einen oder mehrere inaktive Zeiträume einer Zelle an eine Benutzereinrichtung, wobei die Information über den einen oder die mehreren inaktiven Zeiträume der Zelle basierend auf einem für die Zelle konfigurierten diskontinuierlichen Übertragungsmuster der Zelle und einer Angabe der Aktivierung oder Deaktivierung des diskontinuierlichen Übertragungsmusters der Zelle gesendet werden;
Senden (S302, S702) mindestens einer Physical Downlink Shared Channel Resource Allocation für die Benutzereinrichtung; und
Empfangen (S303, S703) eines Hybrid Automatic Repeat Request Acknowledgement Codebook von der Benutzereinrichtung, wobei das Hybrid Automatic Repeat Request Acknowledgement Codebook zumindest teilweise basierend auf einer oder mehreren Ressourcen der mindestens einen Physical Downlink Shared Channel Resource Allocation bestimmt wird, die sich vollständig oder teilweise mit dem einen oder den mehreren inaktiven Zeiträumen der Zelle überschneiden, wobei das Hybrid Automatic Repeat Request Acknowledgement Codebook durch Weglassen der einen oder der mehreren Ressourcen bestimmt wird, die sich vollständig oder teilweise mit dem einen oder den mehreren inaktiven Zeiträumen der Zelle überschneiden.

14. Computerlesbares Medium nach einem der Ansprüche 12 bis 13, wobei die mindestens eine Physical Downlink Shared Channel Resource Allocation eine semistatische Physical Downlink Shared Channel Resource Allocation umfasst, die eine oder mehrere von folgenden umfasst: eine Physical Downlink Shared Channel Time Domain Resource Allocation; eine Semi-Persistent Scheduling Resource Allocation; oder eine Semi-Persistent Scheduling Group Resource Allocation.

15. Computerlesbares Medium nach einem der Ansprüche 12 bis 14, wobei das diskontinuierliche Übertragungsmuster der Zelle einen diskontinuierlichen Übertragungszyklus der Zelle angibt.

## Revendications

1. Appareil (310, 400) comprenant :
un moyen d'obtention d'informations (S201, S301, S601) d'une ou plusieurs périodes non actives d'une cellule, dans lequel les informations des une ou plusieurs périodes non actives de la cellule sont obtenues sur la base d'un schéma de transmission discontinue de cellule configuré pour la cellule et d'une indication d'activation ou de désactivation du schéma de transmission discontinue de cellule ;
un moyen de réception (S202, S302, S602) d'au moins une physical downlink shared channel resource allocation pour l'appareil ;
un moyen de détermination (S203, S603) d'une ou plusieurs ressources de l'au moins une physical downlink shared channel resource allocation qui chevauchent totalement ou en partie les une ou plusieurs périodes non actives de la cellule ; et
un moyen de détermination (S204, S604) d'un hybrid automatic repeat request acknowledgement codebook sur la base, au moins en partie, de la détermination d'une ou plusieurs ressources de l'au moins une physical downlink shared channel resource allocation qui chevauchent totalement ou en partie les une ou plusieurs périodes non actives de la cellule, dans lequel le hybrid automatic repeat request acknowledgement codebook est déterminé en omettant les une ou plusieurs ressources qui chevauchent totalement ou en partie les une ou plusieurs périodes non actives de la cellule.

2. Appareil (320) comprenant :
un moyen de transmission (S301, S701), à un équipement utilisateur, d'informations d'une ou plusieurs périodes non actives d'une cellule, dans lequel les informations des une ou plusieurs périodes non actives de la cellule sont transmises sur la base d'un schéma de transmission discontinue de cellule configuré pour la cellule et d'une indication d'activation ou de désactivation du schéma de transmission discontinue de cellule ;
un moyen de transmission (S302, S702) d'au moins une physical downlink shared channel resource allocation pour l'équipement utilisateur ; et
un moyen de réception (S303, S703) d'un hybrid automatic repeat request acknowledgement codebook provenant de l'équipement utilisateur, dans lequel le hybrid automatic repeat request acknowledgement codebook est déterminé sur la base, au moins en partie, d'une ou plusieurs ressources de l'au moins une physical downlink shared channel resource allocation qui chevauchent totalement ou en partie les une ou plusieurs périodes non actives de la cellule, dans lequel le hybrid automatic repeat request acknowledgement codebook est déterminé en omettant les une ou plusieurs ressources qui chevauchent totalement ou en partie les une ou plusieurs périodes non actives de la cellule.

3. Appareil (310, 320, 400) selon l'une quelconque des revendications 1 et 2, dans lequel les une ou plusieurs ressources comprennent un ou plusieurs créneaux ou symboles.

4. Appareil (310, 320, 400) selon l'une quelconque des revendications 1 à 3, dans lequel l'au moins une physical downlink shared channel resource allocation comprend une physical downlink shared channel resource allocation semi-statique qui comprend l'une ou plusieurs : d'une physical downlink shared channel time domain resource allocation ; d'une semi-persistent scheduling resource allocation ; ou d'une semi-persistent scheduling group resource allocation.

5. Appareil (310, 320, 400) selon l'une quelconque des revendications 1 à 4, dans lequel les une ou plusieurs ressources de l'au moins une physical downlink shared channel resource allocation chevauchent, dans le temps, totalement ou en partie les une ou plusieurs périodes non actives de la cellule.

6. Appareil (310, 320, 400) selon l'une quelconque des revendications 1 à 5, dans lequel le schéma de transmission discontinue de cellule est indicatif d'un cycle de transmission discontinue de cellule.

7. Procédé mis en œuvre par un appareil, comprenant :
l'obtention d'informations (S201, S301, S601) d'une ou plusieurs périodes non actives d'une cellule, dans lequel les informations des une ou plusieurs périodes non actives de la cellule sont obtenues sur la base d'un schéma de transmission discontinue de cellule configuré pour la cellule et d'une indication d'activation ou de désactivation du schéma de transmission discontinue de cellule ;
la réception (S202, S302, S602) d'au moins une physical downlink shared channel resource allocation pour l'appareil ;
la détermination (S203, S603) d'une ou plusieurs ressources de l'au moins une physical downlink shared channel resource allocation qui chevauchent totalement ou en partie les une ou plusieurs périodes non actives de la cellule ; et
la détermination (S204, S604) d'un hybrid automatic repeat request acknowledgement codebook sur la base, au moins en partie, de la détermination d'une ou plusieurs ressources de l'au moins une physical downlink shared channel resource allocation qui chevauchent totalement ou en partie les une ou plusieurs périodes non actives de la cellule, dans lequel le hybrid automatic repeat request acknowledgement codebook est déterminé en omettant les une ou plusieurs ressources qui chevauchent totalement ou en partie les une ou plusieurs périodes non actives de la cellule.

8. Procédé mis en œuvre par un appareil, comprenant :
la transmission (S301, S701), à un équipement utilisateur, d'informations d'une ou plusieurs périodes non actives d'une cellule, dans lequel les informations des une ou plusieurs périodes non actives de la cellule sont transmises sur la base d'un schéma de transmission discontinue de cellule configuré pour la cellule et d'une indication d'activation ou de désactivation du schéma de transmission discontinue de cellule ;;
la transmission (S302, S702) d'au moins une physical downlink shared channel resource allocation pour l'équipement utilisateur ; et
la réception (S303, S703) d'un hybrid automatic repeat request acknowledgement codebook provenant de l'équipement utilisateur, dans lequel le hybrid automatic repeat request acknowledgement codebook est déterminé sur la base, au moins en partie, d'une ou plusieurs ressources de l'au moins une physical downlink shared channel resource allocation qui chevauchent totalement ou en partie les une ou plusieurs périodes non actives de la cellule, dans lequel le hybrid automatic repeat request acknowledgement codebook est déterminé en omettant les une ou plusieurs ressources qui chevauchent totalement ou en partie les une ou plusieurs périodes non actives de la cellule.

9. Procédé selon l'une quelconque des revendications 7 et 8, dans lequel les une ou plusieurs ressources comprennent un ou plusieurs créneaux ou symboles.

10. Procédé selon l'une quelconque des revendications 7 à 9, dans lequel les une ou plusieurs ressources de l'au moins une physical downlink shared channel resource allocation chevauchent, dans le temps, totalement ou en partie les une ou plusieurs périodes non actives de la cellule.

11. Procédé selon l'une quelconque des revendications 7 à 10, dans lequel le schéma de transmission discontinue de cellule est indicatif d'un cycle de transmission discontinue de cellule.

12. Support lisible par ordinateur comprenant des instructions qui, lorsqu'elles sont exécutées par un appareil, amènent l'appareil à mettre en œuvre au moins les opérations suivantes :
l'obtention d'informations (S201, S301, S601) d'une ou plusieurs périodes non actives d'une cellule, dans lequel les informations des une ou plusieurs périodes non actives de la cellule sont obtenues sur la base d'un schéma de transmission discontinue de cellule configuré pour la cellule et d'une indication d'activation ou de désactivation du schéma de transmission discontinue de cellule ;
la réception (S202, S302, S602) d'au moins une physical downlink shared channel resource allocation pour l'appareil ;
la détermination (S203, S603) d'une ou plusieurs ressources de l'au moins une physical downlink shared channel resource allocation qui chevauchent totalement ou en partie les une ou plusieurs périodes non actives de la cellule ; et
la détermination (S204, S604) d'un hybrid automatic repeat request acknowledgement codebook sur la base, au moins en partie, de la détermination d'une ou plusieurs ressources de l'au moins une physical downlink shared channel resource allocation qui chevauchent totalement ou en partie les une ou plusieurs périodes non actives de la cellule, dans lequel le hybrid automatic repeat request acknowledgement codebook est déterminé en omettant les une ou plusieurs ressources qui chevauchent totalement ou en partie les une ou plusieurs périodes non actives de la cellule.

13. Support lisible par ordinateur comprenant des instructions qui, lorsqu'elles sont exécutées par un appareil, amènent l'appareil à mettre en œuvre au moins les opérations suivantes :
la transmission (S301, S701), à un équipement utilisateur, d'informations d'une ou plusieurs périodes non actives d'une cellule, dans lequel les informations des une ou plusieurs périodes non actives de la cellule sont transmises sur la base d'un schéma de transmission discontinue de cellule configuré pour la cellule et d'une indication d'activation ou de désactivation du schéma de transmission discontinue de cellule ; la transmission (S302, S702) d'au moins une physical downlink shared channel resource allocation pour l'équipement utilisateur ; et
la réception (S303, S703) d'un hybrid automatic repeat request acknowledgement codebook provenant de l'équipement utilisateur, dans lequel le hybrid automatic repeat request acknowledgement codebook est déterminé sur la base, au moins en partie, d'une ou plusieurs ressources de l'au moins une physical downlink shared channel resource allocation qui chevauchent totalement ou en partie les une ou plusieurs périodes non actives de la cellule, dans lequel le hybrid automatic repeat request acknowledgement codebook est déterminé en omettant les une ou plusieurs ressources qui chevauchent totalement ou en partie les une ou plusieurs périodes non actives de la cellule.

14. Support lisible par ordinateur selon l'une quelconque des revendications 12 et 13, dans lequel l'au moins une physical downlink shared channel resource allocation comprend une physical downlink shared channel resource allocation semi-statique qui comprend l'une ou plusieurs : d'une physical downlink shared channel time domain resource allocation ; d'une semi-persistent scheduling resource allocation ; ou d'une semi-persistent scheduling group resource allocation.

15. Support lisible par ordinateur selon l'une quelconque des revendications 12 à 14, dans lequel le schéma de transmission discontinue de cellule est indicatif d'un cycle de transmission discontinue de cellule.
